# EUROPEAN PATENT SPECIFICATION

(11) **EP 0 720 887 B1**
(45) Date of publication and mention of the grant of the patent: **28.07.1999**
(21) Application number: 95307041.4
(22) Date of filing: 04.10.1995
(51) Int. Cl.: B23P 15/28, B23B 27/20

(54) **Cutting tool**
Schneidwerkzeug
Outil de coupe

(30) Priority: 04.10.1994 ZA 9407744
(43) Date of publication of application: 10.07.1996
(73) Proprietor: DRUKKER INTERNATIONAL B.V., 5431 SH Cuijk (NL)
(72) Inventor: van Halewijn, Helger Jan, NL-6525 EM Nijmegen (NL); Lemmens, Erik, NL-5831 TM Boxmeer (NL); Nelissen, Wilhelmus G.M., NL-5863 BJ Blitterswijck (NL)
(74) Representative: Senior, Alan Murray

(56) References cited:
- EP-A- 0 336 698
- WO-A-88/07900
- US-A- 4 849 602
- US-A- 5 265 500
- DATABASE WPI Week 9440 Derwent Publications Ltd., London, GB; AN 324883 & ZA-A-9 307 997 (DE BEERS) , 31 August 1994

## Description

### BACKGROUND OF THE INVENTION

This invention relates to a cutting tool, particularly surgical knives.

Cutting tools utilising ultra-hard abrasives such as diamond or cubic boron nitride are known and in wide use in industry. The ultra-hard abrasive is held mechanically, or brazed to, a shank of the tool and presents a cutting edge.

It has been proposed to use diamond produced by chemical vapour deposition (CVD diamond) as the cutting insert in such cutting tools. Methods of depositing material such as diamond on a substrate by chemical vapour deposition are now well established and have been described extensively in the patent and other literature. Where diamond is being deposited on a substrate the method involves providing a mixture of hydrogen or oxygen gas and a suitable gaseous carbon compound such as a hydrocarbon, applying sufficient energy to that gas to dissociate the hydrogen into atomic hydrogen, or the oxygen into atomic oxygen, and the gas into active carbon ions, atoms or CH radicals, and allowing such active species to deposit on the substrate to form diamond. Dissociation of the gases can take place by a variety of methods, e.g. hot filament or RF or microwave energy.

CVD diamond can be produced in a form in which it is bonded to a substrate or in free standing form. ZA-A-9307997 discloses a method of producing a cutting tool insert from a body comprising a layer of CVD diamond bonded to a substrate.

EP-A-480394 discloses a diamond cutting tool comprising a layer of polycrystalline diamond mounted in a recess in a support body. The polycrystalline diamond layer presents a cutting edge portion which may be honed with a laser beam.

### SUMMARY OF THE INVENTION

According to the present invention, a method of making a cutting tool includes the steps of:
- providing an ultra-hard abrasive layer;
- laser cutting the layer into at least two pieces, each of which has a laser cut surface with an edge produced by the entry of the laser cut into the layer, and an edge produced by the exit of the laser cut out of the layer; and
- mounting at least one piece in or on a support to define a tool, the mounting being such that the edge produced by the exit of the laser cut defines a cutting edge for the tool.

Further according to the invention, a cutting tool comprises an ultra-hard abrasive cutting insert presenting a cutting edge, the cutting edge being defined by two intersecting surfaces, at least one of which is a laser cut surface, and the edge being produced, at least in part, by the exit of a laser cut through an ultra-hard abrasive layer.

### DESCRIPTION OF THE DRAWINGS

Figure 1 is a perspective view of a free-standing CVD diamond layer being cut by a laser beam;
Figure 2 is a perspective view of an embodiment of a surgical blade of the invention; and
Figure 3 is a side view of another embodiment of a surgical blade.

### DESCRIPTION OF EMBODIMENTS

Essential to the invention is that the cutting edge for the cutting tool is produced by the exit of a laser cut through an ultra-hard abrasive layer. It has been found that such edges have a minimum of defect features, generally smaller than one micron when a well-tuned high quality laser beam is used. Further, rounding of the edge is minimised reducing the necessity of post-cut sharpening or polishing. The cutting edge is preferably an elongate cutting edge.

An edge produced by the entry of a laser cut ends to be rounded whereas an edge produced by the exit of a laser cut tends to be sharper and more jagged. By using both entry and exit laser cuts in combination for a cutting edge, cutting edges having various forms and characteristics can be produced.

The cutting edge is preferably one defined between intersecting surfaces which define an included angle of no more than 50°, preferably an included angle of between 20 and 40°.

The ultra-hard abrasive may be diamond or cubic boron nitride and may be single crystal or polycrystalline in nature. In a preferred form of the invention, the ultra-hard abrasive is CVD diamond.

The laser cut may be made using any conventional laser beam which will be caused to traverse the layer to cause the cut to be made. In general, a smaller than usual spot size, e.g. less than 12 microns, is used by adjusting the laser accordingly and operating it in a monomode. Typically a pulse length of between 100 and 200 nanoseconds, and a pulse rate of between 2 and 4 kilocycles is used. An example of a suitable laser is Q-switched, NdYAG - 5 to 10kw. The peak power will be matched to the product. The use of linearly polarised laser light (as opposed to circularly polarised laser light) can improve the quality of the cut edge.

An embodiment of the invention will now be described with reference to the accompanying drawings. Referring to these drawings, a free-standing CVD diamond layer 10 is laser cut into two pieces 12, 14 using a laser beam 16 of the type described above. The laser beam is caused to traverse the layer 10 from one side 18 to the opposite side 20 in the direction of the arrow. In this manner the cut is effected. It will be noted that the laser beam is directed at an angle other than 90° to the top surface 22 of the diamond layer 10.

The pieces 12, 14 have adjacent laser cut surfaces. Further, the pieces 12, 14 have edges 24, 26 produced by the entry of the laser beam or cut into the layer 10. The pieces also have edges 28, 30 produced by the exit of the laser beam or cut from the layer 10. It has been found that the exit edges 28, 30 are sharper and have less defects than the entry edges 24, 26. The angle α is typically in the range 20° to 40°.

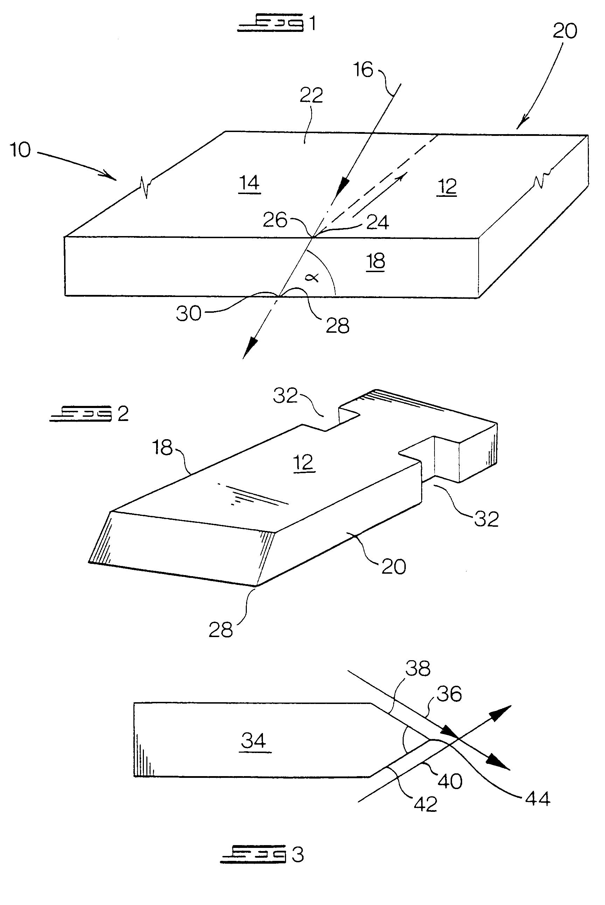

The piece 12 has particular application as a blade in a surgical knife. An example of such a blade is illustrated by Figure 2. Referring to this Figure, the piece 12 has notches 32 cut into opposite sides 18, 20. These notches receive projections on a blade handle (not shown) of known and conventional configuration. The edge 28 defines the cutting edge of the blade. It will be noted that the cutting edge 28 extends diagonally across the piece 12 from side 18 to side 20.

Another embodiment of a surgical blade is illustrated by Figure 3. Referring to this Figure, a piece 34 is cut from a free-standing CVD diamond layer using a laser beam, generally as described above. In this embodiment, the laser beam is first directed in the direction of arrow 36 producing a laser cut surface 38. The laser beam is then used to cut the piece 34 again, but now in the direction of arrow 40. This produces laser cut surface 42. The laser cut surfaces 38, 42 have an included angle of 20° to 40°. A cutting edge 44 is thus produced at the laser cut exit edges of laser cut surfaces 38, 42. It is possible to reverse the direction of one of the laser beams thereby producing a cutting edge defined at the laser cut exit edge of one cut surface and the laser cut entry edge of the other cut surface. The surgical blade may be mounted in a handle in known manner.

In the embodiment of Figure 3, one of the laser beam directions can be reversed producing a cutting edge 44 of different characteristic.

## Claims

1. A method of making a cutting tool including the steps of:
- providing an ultra-hard abrasive layer (10);
- laser cutting the layer into at least two pieces (12, 14), each of which has a laser cut surface with an edge (24, 26) produced by the entry of the laser cut into the layer, and an edge (28, 30) produced by the exit of the laser cut out of the layer; and
- mounting at least one piece (12, 14) in or on a support to define a tool, the mounting being such that the edge (28, 30) produced by the exit of the laser cut defines a cutting edge for the tool.

2. A method according to claim 1 wherein the cutting edge (44) for the tool is defined by the laser cut exit edges of intersecting laser cut surfaces (38, 42).

3. A method according to claim 1 wherein the cutting edge (44) is defined by a laser cut exit edge of one laser cut surface (38) and the laser cut entry edge of an intersecting laser cut surface (42).

4. A method according to any one of the preceding claims wherein the cutting edge (44) is defined between intersecting surfaces (38, 42) which define an included angle of no more than 50°.

5. A method according to claim 4 wherein the included angle is between 20 and 40°.

6. A method according to any one of the preceding claims wherein the ultra-hard abrasive is diamond or cubic boron nitride.

7. A method according to any one of the preceding claims wherein the ultra-hard abrasive is CVD diamond.

## Patentansprüche

1. Verfahren zur Herstellung eines Schneidwerkzeuges mit den folgenden Schritten:
- Bereitstellung einer ultraharten Abrasivschicht (10);
- Laserschneiden der Schicht in mindestens zwei Teile (12, 14), wobei jedes Teil eine lasergeschnittene Fläche mit einer Kante (24, 26), die durch das Eintreten des Schneidlasers in die Schicht erzeugt wird, und einer Kante (28, 30), die durch das Austreten des Schneidlasers aus der Schicht erzeugt wird, aufweist; und
- Anbringen von mindestens einem Teil (12, 14) in oder auf einer Halterung zwecks Ausbildung eines Werkzeugs, wobei das Anbringen so geschieht, daß die durch das Austreten des Lasers produzierte Kante (28, 30) eine Schneidkante für das Werkzeug darstellt.

2. Verfahren nach Anspruch 1, bei dem die Schneidkante (44) für das Werkzeug durch die lasergeschnittenen Austrittskanten der sich überschneidenden lasergeschnittenen Flächen (38, 42) gebildet ist.

3. Verfahren nach Anspruch 1, bei dem die Schneidkante (44) durch eine lasergeschnittene Austrittskante einer lasergeschnittenen Fläche (38) und die lasergeschnittene Eintrittskante einer sich damit überschneidenden lasergeschnittenen Fläche (42) gebildet wird.

4. Verfahren nach einem der vorangegangenen Ansprüche, bei dem die Schneidkante (44) zwischen einander überschneidenden Flächen (38, 42), die einen eingeschlossenen Winkel von maximal 50° definieren, gebildet wird.

5. Verfahren nach Anspruch 4, bei dem der eingeschlossene Winkel zwischen 20 und 40° liegt.

6. Verfahren nach einem der vorangegangenen Ansprüche, bei dem das ultraharte Schleifmaterial Diamant oder kubisches Bornitrid ist.

7. Verfahren nach einem der vorangegangenen Ansprüche, bei dem das ultraharte Schleifmittel ein CVD-Diamant ist.

## Revendications

1. Procédé de fabrication d'un outil de coupe, comprenant les étapes consistant à:
- réaliser une couche (10) d'abrasif ultra-dur;
- avec un laser, découper la couche en au moins deux morceaux 12, 14), dont chacun a une surface découpée par laser avec une arête (24, 26) créée par la pénétration du découpage laser dans la couche, et une arête (28, 30) créée par la sortie du découpage laser hors de la couche; et
- monter au moins un morceau (12, 14) dans ou sur un support pour définir un outil, le montage étant tel que l'arête (28, 30) créée par la sortie du découpage laser définit un tranchant pour l'outil.

2. Procédé selon la revendication 1, dans lequel le tranchant (44) pour l'outil est défini par les arêtes de sortie de découpage laser de surfaces sécantes (38, 42) découpées par laser.

3. Procédé selon la revendication 1, dans lequel le tranchant (44) est défini par une arête de sortie de découpage laser d'une surface (38) découpée par laser et par l'arête de pénétration de découpage laser d'une surface sécante (42) découpée par laser.

4. Procédé selon l'une quelconque des revendications précédentes, dans lequel le tranchant (44) est défini entre des surfaces sécantes (38, 42) qui définissent un angle inclus non supérieur à 50°.

5. Procédé selon la revendication 4, dans lequel l'angle inclus est compris entre 20 et 40°.

6. Procédé selon l'une quelconque des revendications précédentes, dans lequel l'abrasif ultra-dur est du diamant ou du nitrure de bore cubique.

7. Procédé selon l'une quelconque des revendications précédentes, dans lequel l'abrasif ultra-dur est du diamant DCV.
